# EUROPEAN PATENT SPECIFICATION

(11) **EP 3 816 459 B1**
(45) Date of publication and mention of the grant of the patent: **26.07.2023**
(21) Application number: 19382955.3
(22) Date of filing: 31.10.2019
(51) Int. Cl.: F16B 7/18, F16B 7/04, F24S 30/425, H02S 20/32, F16B 5/12

(54) **JOINED ASSEMBLY**
VERBUNDENE BAUGRUPPE
ASSEMBLÉE JOINTE

(43) Date of publication of application: 05.05.2021
(73) Proprietor: Soltec Innovations, S.L., 30500 Molina de Segura (ES)
(72) Inventor: De la Fuente de Pablo, Ayim Manuel, 30500 Molina de Segura (ES); Juan José, Maldonado Nicolás, 30500 Molina de Segura (ES)
(74) Representative: Isern Patentes y Marcas S.L.

(56) References cited:
- EP-A1- 2 939 904
- EP-A2- 2 626 274
- WO-A1-2017/210432
- WO-A1-2018/144266
- KR-B1- 101 065 015
- US-A- 5 378 028
- US-B2- 8 615 960

## Description

### Technical field of the invention

The present invention can be included within the sector of structural mechanics. In particular, the object of the present invention relates to a construction tube with improved functionality which is especially applicable, although not exclusively, to solar tracker structures.

### Background of the invention

In the sector of structural mechanics, tubes with varied cross sections, such as ones that are circular, square, pentagonal, octagonal, D-shaped, etc., are mainly used for a structural purpose. The features of the tubes, such as the modulus for resistance to torsional stress (also known as the "torsional modulus"), the modulus for resistance to bending stress or "bending modulus", the uniformity of mechanical behaviour, the ability to transmit movement, storage and transport capacities, etc., are different for one same dimension of the cross section, depending on the geometry of each type of cross section.

Documents EP2939904A1 (WANZL), US5378028A (ISSAGHOLIAN-HAVAI), US8615960B2 (MARCOTTE), EP2626274A2 (WANZL), WO2018144266A1 (VICTAULIC) and KR101065015B1 (HYUNDAE) disclose known joined assemblies.

Document WO2018/144266A1 (VICTAULIC) disclose a joined assembly comprising an inner part having external longitudinal grooves, and an outer part comprising corresponding internal longitudinal protrusions.

### Description of the Invention

The invention is defined in claims 1 and 8. The present invention describes a construction tube, particularly for use as a torsion tube in solar trackers, but not exclusively, which has a circular cross section, except for in two portions diametrically opposite from each other, which are flattened defining two parallel planes.

The construction tube of the invention has a preferred, but non-exclusive, application in solar collection systems, more specifically in solar trackers of solar collection systems, which will be explained in detail later on.

The construction tube described has an improved combination of features with respect to the tubes mentioned in the prior art, as explained below.
- Regarding torsional resistance: The torsional modulus, which is a critical design parameter for certain applications, determines the mechanical behaviour when faced with torque loads. The cross section with a circular geometry, the torsional modulus of which is the highest possible, has a value of torsional modulus of resistance which is slightly greater than that of the constructive tube of the invention. However, the geometry of the construction tube of the invention increases the torsional modulus of resistance by up to 30% with respect to polygonal geometries, in particular with respect to square geometries. Consequently, the stiffness of the tracker when facing wind loads increases, which causes torsional stress in the tube and is a critical sizing parameter.
- Moreover, this geometry also implies an increase in the torsional stiffness of the construction tube, which implies, when used in a solar tracker, an increase in the natural frequency of the solar tracker, regarding torsion, with respect to the polygonal geometries indicated when they are made up of one same material and sheet thickness. In this case, the increase in the natural frequency of the solar tracker regarding torsional vibration facilitates the structural assembly of the tracker being able to withstand higher wind speeds, preventing the effects of dynamic wind amplification, such as galloping and flutter, both known in the sector, which produce the instability of the structure and can lead to the total collapse thereof.
- Regarding bending resistance: The mechanical behaviour of the tube of the invention is practically uniform in all the directions thereof, both in the main and secondary axes, being very similar to a completely circular geometry. Thereby, it solves the problems of square tubes when faced with bending stresses in the diagonal direction thereof.
- For motion transmission: A coupling of the solar modules to a torsion tube must, on one hand, ensure the parallel nature of the modules and, on the other hand, prevent the modules from sliding on the torsion tube. These are fundamental parameters in the design of a tracker to, on one hand, minimise tracking error (to maximise the energy produced, the modules must be placed completely perpendicular to the sun's rays) and, on the other hand, so that these (small) sliding movements amplify the wind loads until the structure collapses. The geometry of the tube of the invention prevents the rotation of the modules on the tube, due to the variation in the diameter thereof introduced by the flat portions. This makes it possible to ensure the relative position of the tube - solar module by geometry, a significant advantage with respect to the joints based only on friction (these are unsafe and barely used in the solar tracker industry), or with respect to joints that use elements for joining the tube - solar module (such as rivets, screws, etc.) of other trackers with circular tubes, which makes the tube more expensive (it requires additional operations in order to include holes) and greatly complicates the assembly due to the limitation that this entails. The main advantage of tubes with flat geometries with respect to tubes with circular geometries is therefore maintained. With this geometry, the joining of the modules is simple and fast and additional operations do not need to be performed in the tube.
- Regarding logistics: The two flat faces of the tube of the invention enable the tube to be easily gathered together and transported, optimising packaging without needing additional tooling, such as in tubes with conventional flat faces.
- Gain in bifacial trackers: Current bifacial technology, which enables photovoltaic modules to produce electricity with the energy absorbed by both the front portion and the rear portion, has driven the development of solar trackers which seek to minimise shading of the components in the rear portion, an effect not considered until now. Minimising this rear shading has caused the separation of the modules with respect to the torsion tube. By means of the proposed geometry, and with a suitable placement of the curved faces in a position and at a distance with respect to the solar modules, this increases the reflection of the incidental energy on the tube, both the direct radiation thereon as well as the radiation reflected towards the tube itself from the ground or other bodies (albedo), on the rear face of the panels, increasing production in the bifacial panels. Furthermore, due to the elongated geometry thereof on one of the axes thereof and the flattened geometry on the opposite axis, the shaded rear area is reduced with respect to all the symmetrical geometries on the rotation axis thereof with the same coil Idevelopment as described. It also enables the possibility of using a coating/paint (or similar) to increase the reflectivity of the tube and improve the gain in the rear portion of the photovoltaic modules.

In general, as a summary, the use of a circular tube with two flat faces facing each other enables the advantageous features of the tubes with a circular cross section and the tubes with a polygonal cross section to be combined, making a geometry with combined properties that are superior to the state of the art.

### Brief description of the figures

The foregoing and other advantages and features will be more fully understood from the following detailed description of exemplary embodiments with reference to the accompanying drawings, which should be considered by way of illustration and not limitation, in which:
- Figure 1 shows an exploded perspective view illustrating an example not belonging to the invention wherein a construction tube is joined to a connectable element which is also another construction tube, by only using a clamp.
- Figure 2 shows a perspective view wherein it illustrates an example not belonging to the invention which shows how the construction tube is joined to a connectable element which is also another construction tube, by using one clamp for each of the tubes.
- Figures 3A and 3B show a perspective view of an assembly made up of a construction tube of the invention connected to a connectable element, which in the illustrated case corresponds to an output shaft of a reducer of a solar tracker. In particular, Figure 3A shows an exploded view of the tube and the reducer, while Figure 3B shows the result of the joint.
- Figure 4 shows a detail of a perspective view of a frame of a solar collection system, which is adapted to be joined to a tube like the one of the invention.
- Figure 5 shows a detail of a perspective view of a bushing adapted to be joined to the tube of the invention.

### Detailed description of a preferred embodiment

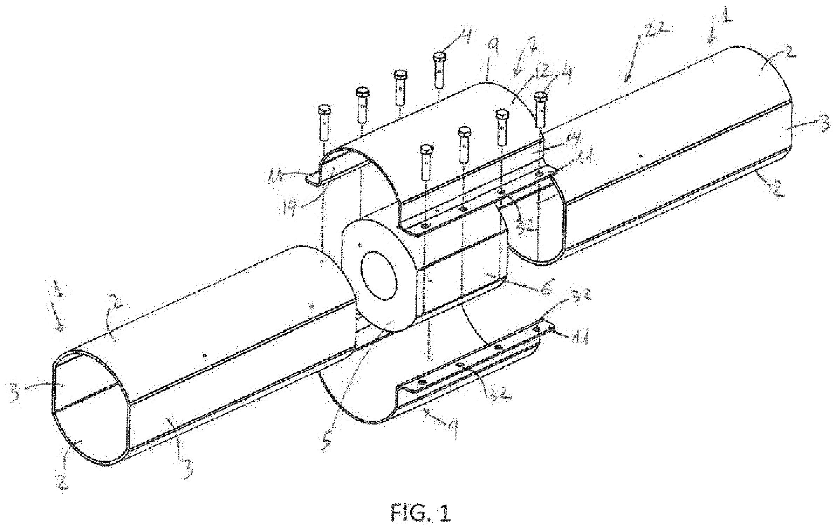

Next, a detailed description is presented, with the aid of Figures 1-5 above, of a construction tube (1) as well as several applications of said tube (1).

As shown in Figures 1, 2, 3A and 3B, the construction tube (1) has a circular cross section, except for two flattened portions located in positions diametrically opposite from each other, which make up two parallel planes. This means that the cross section of the tube (1) is symmetrical and has two circular stretches (2) and two opposite and parallel flat stretches (3) that interrupt the circular stretches (2). The two circular stretches (2) are preferably concentric and have the same radius.

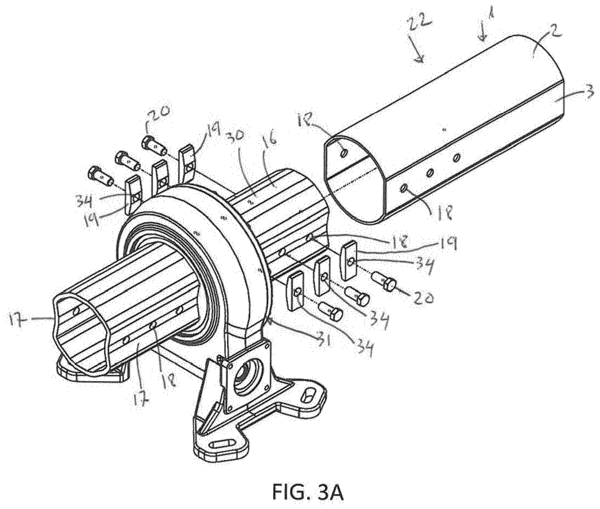

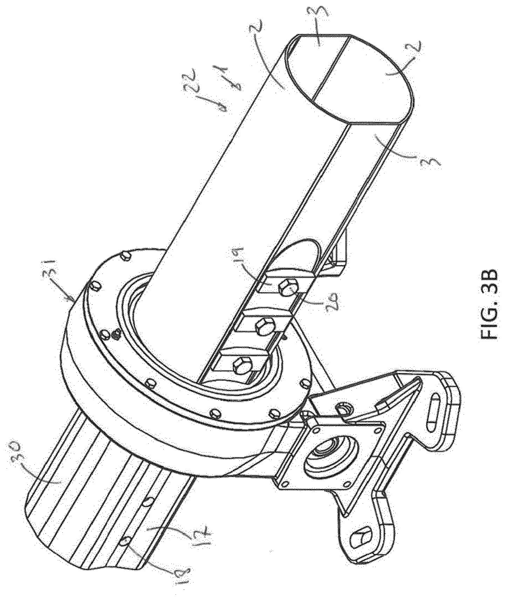

Several possibilities for connecting the construction tube (1) of the invention will be explained below. In general, the construction tube (1) can be connected to other connectable elements, preferably hollow ones, in order to define joined assemblies. The connectable elements may be arranged collinearly with respect to the construction tube (1). Preferably, the connectable element can be another construction tube (1), such that the joined assembly includes a pair of construction tubes (1) connected adjacently, and can be extended in order to join a desired number of construction tubes (1). Also preferably, the connectable element may be an output shaft (30) of a reducer (31) of a solar tracker of a solar collection system, wherein the reducer (31) is shown in Figures 3A and 3B for another example of joining, such that the construction tube (1) of the invention has an application in solar collection systems.

More specifically, in order to carry out the joining of the construction tube (1) to the connectable elements, in particular to the connectable elements indicated as preferred, several preferred cases have been considered.

According to the first case, in order to join the construction tube to the connectable element, an inner part (5) can be used, which is preferably hollow, although it can be solid. The inner part (5) has two opposite ends in the longitudinal direction, wherein a first end is intended to be housed in the construction tube (1), without enabling rotation between the inner part (5) and the construction tube (1), likewise, a second end which is intended to be housed in the connectable element, also without enabling relative rotation. Figure 1 shows, without losing generality, a particular case wherein the connectable element is another construction tube (1).

In order to join the construction tube (1) to the connectable element, at least one clamp (7, 8) can be used together with the inner part (5) or instead of it. Each clamp (7, 8) comprises two semi-clamps (9, 10), wherein each of the semi-clamps (9, 10) has a cross section corresponding to at least one of the construction tube (1) and the connectable element, in order to be able to surround at least one of the two, with restricted rotation between each clamp (7, 8) and the corresponding construction tube (1) and/or connectable element, according to each case. Each semi-clamp (9, 10) further comprises two flanges (11) which protrude externally, in order to join each semi-clamp (9, 10) to the other semi-clamp (9, 10), pressing against the construction tube (1) and/or the connectable element. To do so, joining means (32, 4) are used, such as holes (32) located in the flanges (11) in order to screw one of the semi-clamps (9, 10) to the other semi-clamp (9, 10), through screws (4) for example. Preferably, each semi-clamp (9, 10) comprises a central portion (12) and two end portions (14) which extend from the corresponding central portion (12), wherein the flanges (11) extend from the end portions (14).

When the clamps (7, 8) cooperate with the reinforcement part (5), the reinforcement part (5) serves to form a sandwich-type joint between the clamps (7, 9) and, according to the case, the tube (1) and/or the connectable element that they tighten.

According to a first embodiment, a single first clamp (7) is required, with the corresponding first semi-clamps (9) thereof, wherein the first clamp (7) extends encompassing both the construction tube (1) and the connectable element, in order to tighten them simultaneously.

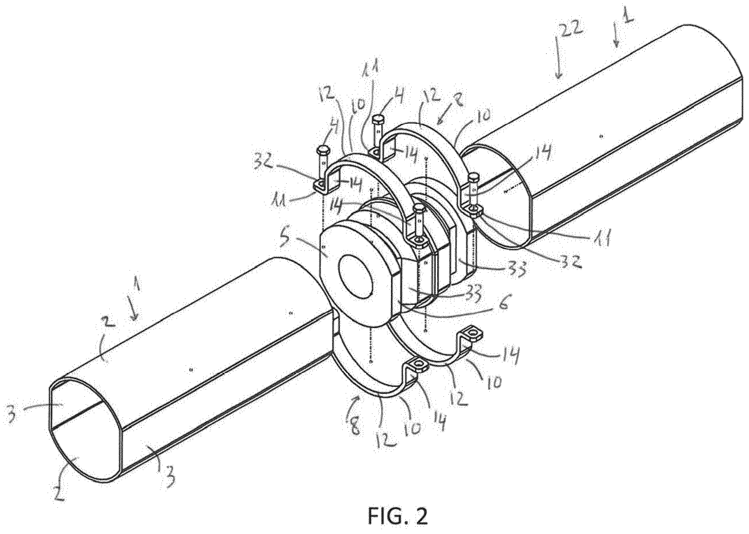

According to a second embodiment, two second clamps (8) are required, each with the corresponding second semi-clamps (10) thereof, wherein one of the two second clamps (8) is placed at the end of the construction tube (1), in order to tighten only the construction tube (1), and the other of the two second clamps (8) is placed at the end of the connectable element in order to tighten only the connectable element. For the case of the second clamps (8), two variants are envisaged, which are explained below with help from Figure 2.

The embodiment shown in Figure 2 can be carried out with an inner part (5) like the one shown in Figure 2 or with an inner part (5) like the one shown in Figure 1. If an inner part like the one in Figure 1 is used, the operations are as explained previously. If, alternatively, an inner part (5) like the one shown in Figure 2 is used, which includes transverse perimeter grooves (33), the second semi-clamps (10) of each second clamp (8) can be made to coincide with one of the grooves (33), such that, when tightening the semi-clamps (33), they deform the construction tube (1) and the connectable element so that it penetrates the grooves (33), producing a joint with restricted rotation, regardless of the shape and dimensions of the inner part (5).

Therefore, according to the foregoing, when one or several clamps (7, 8) are used in combination with the inner part (5), although the first end of the inner part (5) preferably has a circular cross section with two parallel planes (6) that are diametrically opposite from each other, in correspondence in shape and size with the cross section of the construction tube (1), and the second end has a cross section in correspondence in shape and size with the cross section of the connectable element, said configuration corresponding to the inner part (5) is not necessary when the inner part (5) has the grooves (33).

For any of the two aforementioned embodiments, referring to the use of clamps (7, 8), two preferred examples are described below.

According to a first preferred example, shown in Figures 1 and 2, each of the semi-clamps (9, 10) has a circular central portion (12) and encompasses the entirety of one of the circular stretches (2) of the tubes (1); likewise, each semi-clamp (9, 10) has flat end portions (14), which extend from the central portion (12), and which correspond to one portion of the flat stretch (3) of the tubes (1), such that the flanges (11) protrude from the flat end portions (14). Preferably, said flat end portions (14) of the semi-clamps (9, 10) are essentially complementary in length with respect to the total width of the flat stretch (3) of the tubes (1), except for an eventual clearance of about 2-3 mm. Preferably, the flat end portions (14) of each of the semi-clamps (9, 10) are equal in length to those of the other semi-clamp (9, 10).

Alternatively, according to a second preferred example, not shown, the flat and curved portions (12, 14) are switched with respect to the first preferred example. Specifically, each of the semi-clamps (9, 10) has a central portion (12), which in this case is flat, and which encompasses the entirety of the width of one of the flat stretches (3) of the tubes (1); likewise, each semi-clamp (9,10) further has end portions (14), which in this case are circular, and which extend from the flat central portion (12), and which correspond to a portion of the circular stretch (2) of the tubes (1), such that the flanges (11) protrude from the circular end portions (14). The circular end portions (14) of the semi-clamps (9, 10) are essentially complementary in length with respect to the total width of the circular stretch (2) of the tubes (1), in a manner analogous to the one explained above for the flat end portions (14). Preferably, said circular end portions (14) of each of the semi-clamps (9, 10) are identical to those of the other semi-clamp (9, 10). Preferably, in the case of the second example, the inner part (5) can be inserted into the adjacent tubes (1) with a certain clearance.

Another variant for connecting the construction tube (1) to the connectable element is illustrated by means of Figures 3A and 3B, and enables the connectable element to be another housed part (16), for example, a shaft, intended to be housed inside the tube (1), and which has a cross section that does not coincide with that of the tube (1), but which includes respective concave areas (17) in correspondence with some of the stretches (2, 3) of the construction tube (1), preferably in correspondence with each of the flat stretches (3). In particular, first holes (18) are also arranged, both in the flat stretches (3) of the tube (1) and in the concave areas (17) of the housed part (16); likewise, deformation parts (19) are used which are intended to be placed on the flat stretches (3) of the tube (1), and which are in turn equipped with second holes (34) in correspondence with the first holes (18) of the housed part (16) and of the corresponding flat stretch (3) of the tube (1). Thus, when a pin (20) is introduced through the second hole (34) of the deformation part (19), once it is facing the corresponding first holes (18) thereof of the housed part (16) and of the flat stretch (3) of the tube (1), the pin (20) presses on the deformation part (19), which presses against the flat stretch (3) of the tube (1), causing the deformation part (19) to be introduced in the concave area (17) of the housed part (16), causing a joint between the housed part (16) and the tube (1), with restricted rotation.

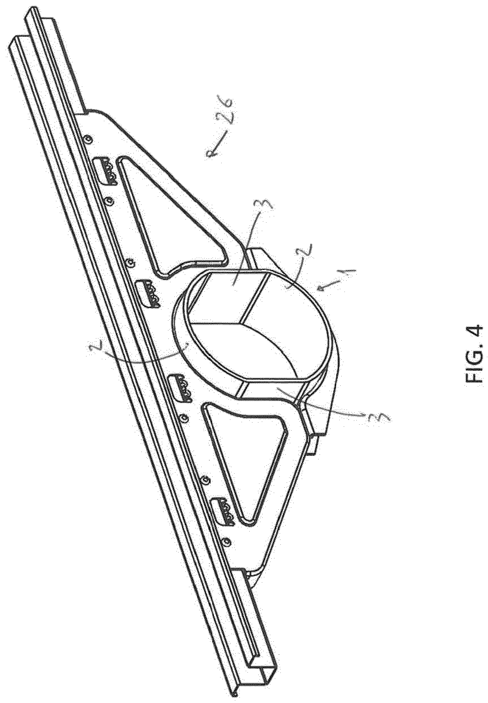

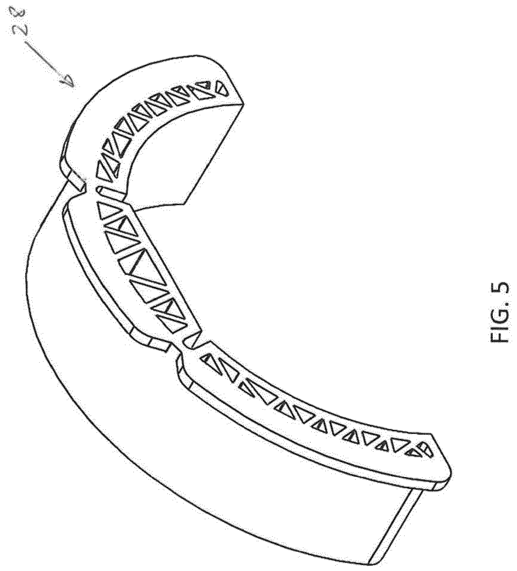

As indicated above, the tube (1) of the invention has a preferred use in solar collection systems. In particular, the tube (1) or, when appropriate, a joined assembly made up of several tubes (1) joined as explained above, is preferably intended to configure a torsion shaft (22) for a solar tracker which provides solar tracking for one or more solar modules which each contain one or several solar panels. In this sense, each solar module, as they are known, has a frame (26), see Figure 4, whereon the solar panels are supported, and which is connected to the torsion shaft (22), in particular to one or several of the tubes (1) of the invention which make up part of the torsion shaft (22). Thus, the frame (26), in a joint area wherein it is connected to one or several tubes (1) of the torsion shaft (22), has a shape consistent with that of the tube (1), i.e., a circular outline with flat areas (27), such that the corresponding tube (1) of the torsion shaft (22) draws the frame (26) in, during the rotation thereof, in order to provide solar tracking for the solar panels. In an analogous manner, the solar tracker may include bushings (28), see Figure 5, which are conventionally used to support the torsion shaft (22) on posts in certain positions, wherein the bushings (28) surround one of the tubes (1) of the torsion shaft (22) in supporting cross sections for supporting on the posts, and wherein the bushings (28) have an inner shape, with circular stretches and flat stretches opposite from each other, which corresponds to the cross section of the tube (1).

The aforementioned housed part (16) can, in such case, be part of an output shaft (30) of a reducer (31) of the solar tracker.

## Claims

1. A joined assembly comprising:
- a construction tube (1) with a circular cross section, comprising two circular stretches (2) and two flat stretches (3) diametrically opposite from each other which define two parallel planes interrupting the circular stretches (2);
- a connectable element arranged collinearly to the construction tube (1) and joined to said construction tube (1);
- an inner part (5), with a first end housed in the construction tube (1), and a second end housed in the connectable element, in order to connect the construction tube (1) to the connectable element without rotation between the inner part (5) and the construction tube (1) or the connectable element, nor between the construction tube (1) or the connectable element;
- at least one clamp (7, 8) for fastening the construction tube (1) to the connectable element,
wherein each of the clamps (7, 8) comprises two semi-clamps (9, 10), wherein each of the semi-clamps (9, 10) has a cross section corresponding to that of at least one of the construction tube (1) and the connectable element, in order to be able to surround at least one of the two, with relative restricted rotation of the clamp (7, 8) with the construction tube (1) and the connectable element, and
wherein each semi-clamp (9, 10) further comprises two flanges (11) which protrude externally,
wherein, additionally, joining means (4, 32) are included in order to join one of the semi-clamps (9, 10) to the other semi-clamp (9, 10) by pressing against at least one of the construction tube (1) and the connectable element;
**characterized in that** the assembly further comprises:
- two second clamps (8), with corresponding second semi-clamps (10) thereof, wherein one of the two second clamps (8) is placed at the end of the construction tube (1), for tightening only the construction tube (1), while the other of the two second clamps (8) is placed at the end of the connectable element for tightening only the connectable element;
wherein the inner part (5) includes transverse perimeter grooves (33), wherein the second semi-clamps (10) of each second clamp (8) are superposed to one of the grooves (33), such that, when tightening the semi-clamps (33), they deform the construction tube (1) and the connectable element so that they penetrate the grooves (33), producing a joint with restricted rotation.

2. The joined assembly, according to claim 1, **characterised in that** the cross section is symmetrical, wherein the two circular stretches (2) are concentric and have the same radius.

3. The joined assembly according to claim 1, wherein the inner part (5) has, at the first end thereof, a circular cross section with two parallel planes (6) diametrically opposite from each other, in correspondence in shape and size with the cross section of the construction tube (1); likewise, at the second end the inner part (5) has a cross section corresponding in shape and size with the cross section of the connectable element.

4. The joined assembly according to claim 1, **characterised in that** each semi-clamp (9, 10) comprises a central portion (12) and two end portions (14) which extend from the central portion (12), wherein the flanges (11) extend from the end portions (14).

5. The joined assembly according to claim 4, **characterised in that** the central portion (12) of each of the semi-clamps is a circular central portion (12) which encompasses the entirety of the circular stretches (2) of the construction tube (1) and of the connectable element, while the end portions (14) are flat end portions (14), which extend from the circular central portion (12), and which correspond to a part of the flat stretch (3) of the construction tube (1), such that the flanges (11) protrude from the flat end portions (14);
wherein the flat end portions (14) of the two semi-clamps (9,10) are preferably essentially complementary in length with respect to the total width of the flat stretch (3) of the construction tube (1).

6. The joined assembly according to claim 4, **characterised in that** the central portion (12) of each of the semi-clamps (9,10) is a flat central portion (12) which encompasses the entirety of the width of one of the flat stretches (3) of the construction tube (1); likewise, the end portions (14) are circular end portions (14), which extend from the flat central portion (12), and correspond to a portion of the circular stretch (2) of the construction tube (1), such that the flanges (11) protrude from the circular end portions (14); and wherein the circular end portions (14) of the two semi-clamps (9, 10) are preferably essentially complementary in length with respect to the total width of the circular stretch (2) of the construction tube (1).

7. The joined assembly, according to any of claims 1, 4, 5 and 6, **characterised in that** in order to join the construction tube (1) to the connectable element, it comprises a single first clamp (7), formed by two first semi-clamps (9), and which extends encompassing the construction tube (1) and the connectable element in order to tighten both simultaneously.

8. A joined assembly comprising:
- a construction tube (1) with a circular cross section, comprising two circular stretches (2) and two flat stretches (3) diametrically opposite from each other which define two parallel planes interrupting the circular stretches (2);
- a connectable element arranged collinearly to the construction tube (1) and joined to said construction tube (1);
wherein
the connectable element is a housed part (16), for example, a shaft, intended to be housed inside the tube (1), and which has a cross section that does not coincide with that of the tube (1),
wherein the housed part (16) includes respective concave areas (17) in correspondence with some of the stretches (2, 3) of the construction tube (1), preferably in correspondence with each of the flat stretches (3), wherein the joined assembly additionally comprises:
- first holes (18), both in the corresponding stretches (2, 3) of the tube (1) and in the concave areas (17) of the housed part (16), **characterized in that** the assembly further comprises:
- deformation parts (19) intended to be placed on the corresponding stretches (2,3) of the tube (1), and which are in turn equipped with second holes (34) in correspondence with the first holes (18) of the housed part (16) and of the corresponding flat stretch (2,3) of the tube (1),
such that, when a pin (20) is introduced through the second hole (34) of the deformation part (19), once it is facing the corresponding first holes (18) thereof of the housed part (16) and of the corresponding stretch (2,3) of the tube (1), the pin (20) presses on the deformation part (19), which presses against the corresponding stretch (2,3) of the tube (1), causing the deformation part (19) to be introduced in the concave area (17) of the housed part (16), causing a joint between the housed part (16) and the tube (1), with restricted rotation.

9. The joined assembly according to any of claims 1-8, **characterised in that** the connectable element is another construction tube (1).

10. The joined assembly, according to any of claims 1-8, **characterised in that** the connectable element is an output shaft (30) of a reducer (31) of a solar tracker, the construction tube (1) being a portion of a torsion shaft (22) of the solar tracker.

## Patentansprüche

1. Zusammengefügte Anordnung, umfassend:
- ein Konstruktionsrohr (1) mit einem kreisförmigen Querschnitt, das zwei kreisförmige Ausdehnungen (2) und zwei einander diametral gegenüberliegende flache Ausdehnungen (3) umfasst, die zwei parallele Ebenen definieren, die die kreisförmigen Ausdehnungen (2) unterbrechen;
- ein verbindbares Element, das kollinear zu dem Konstruktionsrohr (1) angeordnet und mit dem Konstruktionsrohr (1) zusammengefügt ist;
- ein Innenteil (5) mit einem ersten Ende, das in dem Konstruktionsrohr (1) untergebracht ist, und einem zweiten Ende, das in dem verbindbaren Element untergebracht ist, um das Konstruktionsrohr (1) mit dem verbindbaren Element ohne Drehung weder zwischen dem Innerenteil (5) und dem Konstruktionsrohr (1) oder dem verbindbaren Element noch zwischen dem Konstruktionsrohr (1) oder dem verbindbaren Element zu verbinden;
- mindestens eine Schelle (7, 8) zum Befestigen des Konstruktionsrohres (1) an dem Verbindungselement,
wobei jede der Schellen (7, 8) zwei Halbschellen (9, 10) umfasst, wobei jede der Halbschellen (9, 10) einen Querschnitt aufweist, der dem von mindestens einem des Konstruktionsrohrs (1) und dem verbindbaren Element entspricht, um in der Lage zu sein, mindestens eines der beiden bei relativ eingeschränkter Drehung der Schelle (7, 8) mit dem Konstruktionsrohr (1) und dem verbindbaren Element zu umgeben, und
wobei jede Halbschelle (9, 10) ferner zwei Flansche (11) umfasst, die nach außen vorstehen,
wobei zusätzlich Zusammenfügungsmittel (4, 32) enthalten sind, um durch Drücken gegen mindestens eines des Konstruktionsrohrs (1) und des verbindbaren Elements eine der Halbschellen (9, 10) mit der anderen Halbschelle (9, 10) zusammenzufügen; **dadurch gekennzeichnet, dass** die Anordnung ferner umfasst:
- zwei zweite Schellen (8) mit entsprechenden zweiten Halbschellen (10) davon, wobei eine der beiden zweiten Schellen (8) an dem Ende des Konstruktionsrohrs (1) platziert ist, um nur das Konstruktionsrohr (1) festzuziehen, während die andere der beiden zweiten Schellen (8) an dem Ende des verbindbaren Elements platziert ist, um nur das verbindbare Element festzuziehen;
wobei das Innenteil (5) Querumfangsnuten (33) einschließt, wobei die zweiten Halbschellen (10) jeder zweiten Schelle (8) über einer der Nuten (33) angeordnet sind, sodass sie beim Festziehen der Halbschellen (33) das Konstruktionsrohr (1) und das Verbindungselement verformen, sodass sie in die Nuten (33) eindringen und eine Verbindung mit eingeschränkter Drehung erzeugen.

2. Zusammengefügte Anordnung nach Anspruch 1, **dadurch gekennzeichnet, dass** der Querschnitt symmetrisch ist, wobei die beiden kreisförmigen Ausdehnungen (2) konzentrisch sind und den gleichen Radius aufweisen.

3. Zusammengefügte Anordnung nach Anspruch 1, wobei das Innenteil (5) an dem ersten Ende davon einen kreisförmigen Querschnitt mit zwei parallelen Ebenen (6) aufweist, die einander diametral gegenüberliegen und in Form und Größe dem Querschnitt des Konstruktionsrohrs (1) entsprechen; an dem zweiten Ende das Innenteil (5) ebenfalls einen Querschnitt aufweist, der in Form und Größe dem Querschnitt des verbindbaren Elements entspricht.

4. Zusammengefügte Anordnung nach Anspruch 1, **dadurch gekennzeichnet, dass** jede Halbschelle (9, 10) einen Mittelabschnitt (12) und zwei Endabschnitte (14) umfasst, die sich von dem Mittelabschnitt (12) aus erstrecken, wobei sich die Flansche (11) von den Endabschnitten (14) erstrecken.

5. Zusammengefügte Anordnung nach Anspruch 4, **dadurch gekennzeichnet, dass** der Mittelabschnitt (12) jeder der Halbschellen ein kreisförmiger Mittelabschnitt (12) ist, der die Gesamtheit der kreisförmigen Ausdehnungen (2) des Konstruktionsrohrs (1) und des verbindbaren Elements umgibt, während die Endabschnitte (14) flache Endabschnitte (14) sind, die sich von dem kreisförmigen Mittelabschnitt (12) erstrecken und die einem Teil des flachen Abschnitts (3) des Konstruktionsrohrs (1) entsprechen, sodass die Flansche (11) von den flachen Endabschnitten (14) vorstehen;
wobei die flachen Endabschnitte (14) der beiden Halbschellen (9, 10) in Bezug auf die Gesamtbreite des flachen Abschnitts (3) des Konstruktionsrohrs (1) vorzugsweise im Wesentlichen komplementär in der Länge sind.

6. Zusammengefügte Anordnung nach Anspruch 4, **dadurch gekennzeichnet, dass** der Mittelabschnitt (12) jeder der Halbschellen (9, 10) ein flacher Mittelabschnitt (12) ist, der die gesamte Breite eines der flachen Ausdehnungen (3) des Konstruktionsrohres (1) umgibt; die Endabschnitte (14) ebenfalls kreisförmige Endabschnitte (14) sind, die sich von dem flachen Mittelabschnitt (12) erstrecken und einem Abschnitt der kreisförmigen Ausdehnung (2) des Konstruktionsrohrs (1) entsprechen, sodass die Flansche (11) von den kreisförmigen Endabschnitten (14) vorstehen; und wobei die kreisförmigen Endabschnitte (14) der beiden Halbschellen (9, 10) in der Länge in Bezug auf die Gesamtbreite des kreisförmigen Abschnitts (2) des Konstruktionsrohrs (1) vorzugsweise im Wesentlichen komplementär sind.

7. Zusammengefügte Anordnung nach einem der Ansprüche 1, 4, 5 und 6, **dadurch gekennzeichnet, dass** sie zum Zusammenfügen des Konstruktionsrohrs (1) mit dem verbindbaren Element eine einzelne erste Schelle (7) umfasst, die durch zwei erste Halbschellen (9) gebildet wird, und die sich das Konstruktionsrohr (1) und das Verbindungselement umgebend erstreckt, um beide gleichzeitig festzuziehen.

8. Zusammengefügte Anordnung, umfassend:
- ein Konstruktionsrohr (1) mit einem kreisförmigen Querschnitt, das zwei kreisförmige Ausdehnungen (2) und zwei einander diametral gegenüberliegende flache Ausdehnungen (3) umfasst, die zwei parallele Ebenen definieren, die die kreisförmigen Ausdehnungen (2) unterbrechen;
- ein verbindbares Element, das kollinear zu dem Konstruktionsrohr (1) angeordnet und mit dem Konstruktionsrohr (1) zusammengefügt ist;
wobei das verbindbare Element ein untergebrachtes Teil (16) ist, zum Beispiel eine Welle, das zum Unterbringen innerhalb des Rohrs (1) gedacht ist und das einen Querschnitt aufweist, der nicht mit dem des Rohrs (1) übereinstimmt,
wobei das untergebrachte Teil (16) entsprechende konkave Bereiche (17) in Entsprechung zu einigen der Ausdehnungen (2, 3) des Konstruktionsrohrs (1) einschließt, vorzugsweise in Entsprechung zu jeder der flachen Ausdehnungen (3), wobei die zusammengefügte Anordnung zusätzlich umfasst:
- erste Löcher (18) sowohl in den entsprechenden Ausdehnungen (2, 3) des Rohrs (1) als auch in den konkaven Bereichen (17) des untergebrachten Teils (16), **dadurch gekennzeichnet, dass** die Anordnung ferner umfasst:
- Verformungsteile (19), die zum Platzieren auf den entsprechenden Ausdehnungen (2, 3) des Rohrs (1) gedacht sind und die ihrerseits mit zweiten Löchern (34) entsprechend den ersten Löchern (18) des untergebrachten Teils (16) und der entsprechenden flachen Ausdehnung (2, 3) des Rohres (1) ausgestattet sind,
sodass, wenn ein Stift (20) durch das zweite Loch (34) des Verformungsteils (19) eingeführt wird, sobald er den entsprechenden ersten Löchern (18) davon des aufgenommenen Teils (16) und der entsprechenden Ausdehnung (2, 3) des Rohrs (1) zugewandt ist, der Stift (20) auf das Verformungsteil (19) drückt, das gegen die entsprechende Ausdehnung (2, 3) des Rohrs (1) drückt, wodurch bewirkt wird, dass das Verformungsteil (19) in den konkaven Bereich (17) des untergebrachten Teils (16) eingeführt wird, wodurch eine drehfeste Verbindung zwischen dem untergebrachten Teil (16) und dem Rohr (1) bewirkt wird.

9. Zusammengefügte Anordnung nach einem der Ansprüche 1 bis 8, **dadurch gekennzeichnet, dass** das verbindbare Element ein weiteres Konstruktionsrohr (1) ist.

10. Zusammengefügte Anordnung nach einem der Ansprüche 1 bis 8, **dadurch gekennzeichnet, dass** das verbindbare Element eine Ausgangswelle (30) eines Untersetzungsgetriebes (31) einer Sonnennachführeinrichtung ist, wobei das Konstruktionsrohr (1) ein Abschnitt einer Torsionswelle (22) der Sonnennachführeinrichtung ist.

## Revendications

1. Ensemble joint comprenant :
- un tube de construction (1) avec une section transversale circulaire, comprenant deux tronçons circulaires (2) et deux tronçons plats (3) diamétralement opposés l'un à l'autre qui définissent deux plans parallèles interrompant les tronçons circulaires (2) ;
- un élément raccordable disposé colinéairement au tube de construction (1) et joint audit tube de construction (1) ;
- une partie intérieure (5), avec une première extrémité logée dans le tube de construction (1), et une deuxième extrémité logée dans l'élément raccordable, afin de raccorder le tube de construction (1) à l'élément raccordable sans rotation entre la partie intérieure (5) et le tube de construction (1) ou l'élément raccordable, ni entre le tube de construction (1) ou l'élément connectable ;
- au moins une pince (7, 8) pour la fixation du tube de construction (1) à l'élément raccordable,
chacune des pinces (7, 8) comprend deux demi-pinces (9, 10), dans lequel chacune des demi-pinces (9, 10) a une section transversale correspondant à celle d'au moins l'un parmi le tube de construction (1) et l'élément raccordable, afin de pouvoir entourer au moins l'un des deux, avec une rotation relativement restreinte de la pince (7, 8) avec le tube de construction (1) et l'élément raccordable, et
dans lequel chaque demi-pince (9, 10) comprend en outre deux brides (11) qui font saillie vers l'extérieur,
dans lequel, en outre, des moyens de jonction (4, 32) sont inclus afin de joindre l'une des demi-pinces (9, 10) à l'autre demi-pince (9, 10) en appuyant contre au moins l'un parmi le tube de construction (1) et l'élément raccordable ; **caractérisé en ce que** le dispositif comprend en outre :
- deux deuxièmes pinces (8), avec des deuxièmes demi-pinces correspondantes (10) de celles-ci, dans lequel l'une des deux deuxièmes pinces (8) est placée à l'extrémité du tube de construction (1), pour serrer uniquement le tube de construction (1), tandis que l'autre des deux deuxièmes pinces (8) est placée à l'extrémité de l'élément raccordable pour serrer uniquement l'élément raccordable ;
dans lequel la partie intérieure (5) inclut des rainures transversales périmétriques (33), dans lequel les deuxièmes demi-pinces (10) de chaque deuxième pince (8) sont superposées à l'une des rainures (33), de telle sorte que, lors du serrage des demi-pinces (33), elles déforment le tube de construction (1) et l'élément raccordable de sorte qu'elles pénètrent dans les rainures (33), produisant un joint à rotation restreinte.

2. Ensemble joint, selon la revendication 1, **caractérisé en ce que** la section transversale est symétrique, dans lequel les deux tronçons circulaires (2) sont concentriques et ont le même rayon.

3. Ensemble joint selon la revendication 1, dans lequel la partie intérieure (5) a, à la première extrémité de celle-ci, une section transversale circulaire avec deux plans parallèles (6) diamétralement opposés l'un à l'autre, en correspondance de forme et de taille avec la section transversale du tube de construction (1) ; de même, à la deuxième extrémité, la partie intérieure (5) a une section transversale correspondant en forme et en taille à la section transversale de l'élément raccordable.

4. Ensemble joint selon la revendication 1, **caractérisé en ce que** chaque demi-pince (9, 10) comprend une portion centrale (12) et deux portions d'extrémité (14) qui s'étendent à partir de la portion centrale (12), dans lequel les brides (11) s'étendent depuis les portions d'extrémité (14).

5. Ensemble joint selon la revendication 4, **caractérisé en ce que** la portion centrale (12) de chacune des demi-pinces est une portion centrale circulaire (12) qui englobe l'intégralité des tronçons circulaires (2) du tube de construction (1) et de l'élément raccordable, tandis que les portions d'extrémité (14) sont des portions d'extrémité plates (14), qui s'étendent depuis la portion centrale circulaire (12), et qui correspondent à une partie du tronçon plat (3) du tube de construction (1), de telle sorte que les brides (11) font saillie des portions d'extrémité plates (14) ;
dans lequel les portions d'extrémité plates (14) des deux demi-pinces (9, 10) sont de préférence essentiellement complémentaires en longueur par rapport à la largeur totale du tronçon plat (3) du tube de construction (1).

6. Ensemble joint selon la revendication 4, **caractérisé en ce que** la portion centrale (12) de chacune des demi-pinces (9, 10) est une portion centrale plate (12) qui englobe la totalité de la largeur de l'un des tronçons plats (3) du tube de construction (1); de même, les portions d'extrémité (14) sont des portions d'extrémité circulaires (14), qui s'étendent à partir de la portion centrale plate (12) et correspondent à une portion du tronçon circulaire (2) du tube de construction (1), de telle sorte que les brides (11) font saillie des portions d'extrémité circulaires (14) ; et dans lequel les portions d'extrémité circulaires (14) des deux demi-pinces (9, 10) sont de préférence essentiellement complémentaires en longueur par rapport à la largeur totale du tronçon circulaire (2) du tube de construction (1).

7. Ensemble joint, selon l'une quelconque des revendications 1, 4, 5 et 6, **caractérisé en ce qu'**afin de joindre le tube de construction (1) à l'élément raccordable, il comprend une seule première pince (7), formée par deux premiers demi-pinces (9), et qui s'étend en englobant le tube de construction (1) et l'élément raccordable safin de serrer les deux simultanément.

8. Ensemble joint comprenant :
- un tube de construction (1) avec une section transversale circulaire, comprenant deux tronçons circulaires (2) et deux tronçons plats (3) diamétralement opposés l'un à l'autre qui définissent deux plans parallèles interrompant les tronçons circulaires (2) ;
- un élément raccordable disposé colinéairement au tube de construction (1) et joint audit tube de construction (1) ;
dans lequel l'élément raccordable est une partie logée (16), par exemple, un arbre, destiné à être logé à l'intérieur du tube (1), et qui a une section transversale qui ne coïncide pas avec celle du tube (1),
dans lequel la partie logée (16) comprend des zones concaves respectives (17) en correspondance avec certains des tronçons (2, 3) du tube de construction (1), de préférence en correspondance avec chacun des tronçons plats (3), dans lequel l'ensemble joint comprend en outre :
- des premiers trous (18), tant dans les tronçons correspondants (2, 3) du tube (1) que dans les zones concaves (17) de la partie logée (16), **caractérisé en ce que** le dispositif comprend en outre :
- des parties de déformation (19) destinées à être placées sur les tronçons correspondants (2, 3) du tube (1), et qui sont à leur tour équipées de deuxièmes trous (34) en correspondance avec les premiers trous (18) de la partie logée (16) et du tronçon plat correspondant (2, 3) du tube (1),
de telle sorte que, lorsqu'une goupille (20) est introduite à travers le deuxième trou (34) de la partie de déformation (19), une fois qu'elle est en regard des premiers trous correspondants (18) de celle-ci de la partie logée (16) et du tronçon correspondant (2, 3) du tube (1), la goupille (20) appuie sur la partie de déformation (19), qui appuie contre le tronçon correspondant (2, 3) du tube (1), amenant la partie de déformation (19) à être introduite dans la zone concave (17) de la partie logée (16), amenant une jonction entre la partie logée (16) et le tube (1), à rotation restreinte.

9. Ensemble joint selon l'une quelconque des revendications 1 à 8, **caractérisé en ce que** l'élément raccordable est un autre tube de construction (1).

10. Ensemble joint, selon l'une quelconque des revendications 1 à 8, **caractérisé en ce que** l'élément raccordable est un arbre de sortie (30) d'un réducteur (31) d'un suiveur solaire, le tube de construction (1) étant une portion d'un arbre de torsion (22) du suiveur solaire.
